(19) Europäisches Patentamt
European Patent Office
Office européen des brevets

(11) **EP 4 257 838 A1**

(12) **EUROPEAN PATENT APPLICATION**
published in accordance with Art. 153(4) EPC

(43) Date of publication:
**11.10.2023 Bulletin 2023/41**

(21) Application number: **21900297.9**

(22) Date of filing: **13.10.2021**

(51) International Patent Classification (IPC):
*F16D 49/12* (2006.01)    *F16D 66/00* (2006.01)
*B66D 1/50* (2006.01)    *B66D 1/72* (2006.01)
*B63B 21/16* (2006.01)    *B63B 21/20* (2006.01)

(52) Cooperative Patent Classification (CPC):
**B63B 21/16; B63B 21/20; B66D 1/50; B66D 1/72;
F16D 49/12; F16D 66/00**

(86) International application number:
**PCT/JP2021/037838**

(87) International publication number:
**WO 2022/118541 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020 JP 2020200537**

(71) Applicant: **KAWASAKI JUKOGYO KABUSHIKI
KAISHA**
**Kobe-shi, Hyogo 650-8670 (JP)**

(72) Inventors:
• **OE, Hiroshi**
**Hyogo, 650-8670 (JP)**
• **KAZAMA, Eiki**
**Hyogo, 650-8670 (JP)**
• **NODA, Takashi**
**Hyogo, 650-8670 (JP)**

(74) Representative: **Dehns**
**St. Bride's House**
**10 Salisbury Square**
**London EC4Y 8JD (GB)**

(54) **MOORING LINE TENSION CONTROL SYSTEM**

(57) A mooring line tension control system (1) includes: a drum (3) around which a mooring line is wound; and control circuitry (7) that controls a motor (22), a band brake (4), and a clutch (24). The motor (22) rotates the drum (3). A load cell (40) that measures band tension is incorporated in the band brake (4). In a ship mooring state, the control circuitry (7) calculates tension of the mooring line based on the band tension measured by the load cell (40), and in a case where the calculated tension of the mooring line is greater than a setting value, the control circuitry (7) switches the band brake 4 to a released state to unwind the mooring line from the drum (3), and thereafter switches the clutch (24) to an engaged state and drives the motor (22) to wind the mooring line around the drum (3).

FIG. 1

## Description

### Technical Field

The present disclosure relates to a system for controlling the tension of a mooring line with which to moor a ship to, for example, a quay wall.

### Background Art

Conventionally, a ship is mounted with a winch for a mooring line. Generally speaking, the winch includes: a drum around which a mooring line is wound; a motor (a hydraulic motor or an electric motor) that rotates the drum; a brake that prevents the drum from rotating (i.e., brakes the drum) or allows the drum to rotate; and a clutch located between the drum and the motor.

While the ship is in the state of mooring at a quay wall or the like with the mooring line, the tension of the mooring line changes depending on a tide level, a load weight, wind, a tidal current, etc. In order to monitor the mooring line tension that changes in such a manner, Patent Literature 1 discloses mooring line monitoring equipment that detects and displays the tension of a mooring line. The mooring line monitoring equipment provides an advantageous effect that it becomes no longer necessary for a ship crew to go round to check the state of the winch.

For the detection of the tension of the mooring line, the mooring line monitoring equipment of Patent Literature 1 uses, as a drum, a split drum including a storage drum and a tension drum, and in the ship mooring state, the mooring line is wound around the tension drum and the radius from the center of the drum to the line of action of tension is made constant. Also, the mooring line monitoring equipment of Patent Literature 1 uses, as a brake, a band brake including a brake drum. A load cell is incorporated in the band brake. A measurement value of the load cell is converted into the tension of the mooring line.

The mooring line monitoring equipment of Patent Literature 1 further includes a mooring winch automatic controller that performs automatic control of multiple winches such that the mooring line tension is substantially the same among the multiple winches.

### Citation List

### Patent Literature

PTL 1: Japanese Laid-Open Patent Application Publication No. 2002-211478

### Summary of Invention

### Technical Problem

However, Patent Literature 1 does not give any specific description on how the mooring winch automatic controller controls each winch. Meanwhile, in a case where the tension of a mooring line becomes excessively great, there is a desire to loosen the mooring line and then rewind the mooring line without directly operating the winch.

In view of the above, an object of the present disclosure is to provide a mooring line tension control system that makes it possible to, in a case where the tension of a mooring line becomes excessively great, loosen the mooring line and then rewind the mooring line without directly operating the winch.

### Solution to Problem

In order to solve the above-described problems, a mooring line tension control system according to the present disclosure includes: a drum around which a mooring line is wound; a motor that rotates the drum in an unwinding direction and a winding direction; a band brake that is switched between a restraining state in which the band brake prevents the drum from rotating and a released state in which the band brake allows the drum to rotate, the band brake including a brake drum that rotates together with the drum; a clutch that is switched between an engaged state in which the clutch couples the drum to the motor and a disengaged state in which the clutch separates the drum from the motor; control circuitry that controls the motor, the band brake, and the clutch; and a load cell that measures band tension, the load cell being incorporated in the band brake. In a ship mooring state in which the clutch is in the disengaged state and the band brake is in the restraining state, the control circuitry calculates tension of the mooring line based on the band tension measured by the load cell, and in a case where the calculated tension of the mooring line is greater than a setting value, the control circuitry switches the band brake to the released state to unwind the mooring line from the drum, and thereafter switches the clutch to the engaged state and drives the motor to wind the mooring line around the drum.

According to the above configuration, in a ship mooring state, in a case where the tension of the mooring line becomes greater than the setting value, the control circuitry operates the band brake, the clutch, and the motor to loosen the mooring line and then rewind the mooring line. Thus, when the tension of the mooring line becomes excessively great, loosening and rewinding of the mooring line can be performed without directly operating the winch.

**Advantageous Effects of Invention**

The present disclosure provides a mooring line tension control system that makes it possible to, in a case where the tension of a mooring line becomes excessively great, loosen the mooring line and then rewind the mooring line without directly operating the winch.

**Brief Description of Drawings**

FIG. 1 shows a schematic configuration of a mooring line tension control system according to one embodiment of the present disclosure.
FIG. 2 is a sectional view taken along line II-II of FIG. 1.
FIG. 3 shows a schematic configuration of a band brake.
FIG. 4 shows a flowchart of control in a ship mooring mode.
FIG. 5 shows a variation of a winding layer number detector.
FIG. 6 shows another variation of the winding layer number detector.
FIG. 7 shows yet another variation of the winding layer number detector.
FIG. 8 shows a schematic configuration of a variation of the band brake.

**Description of Embodiments**

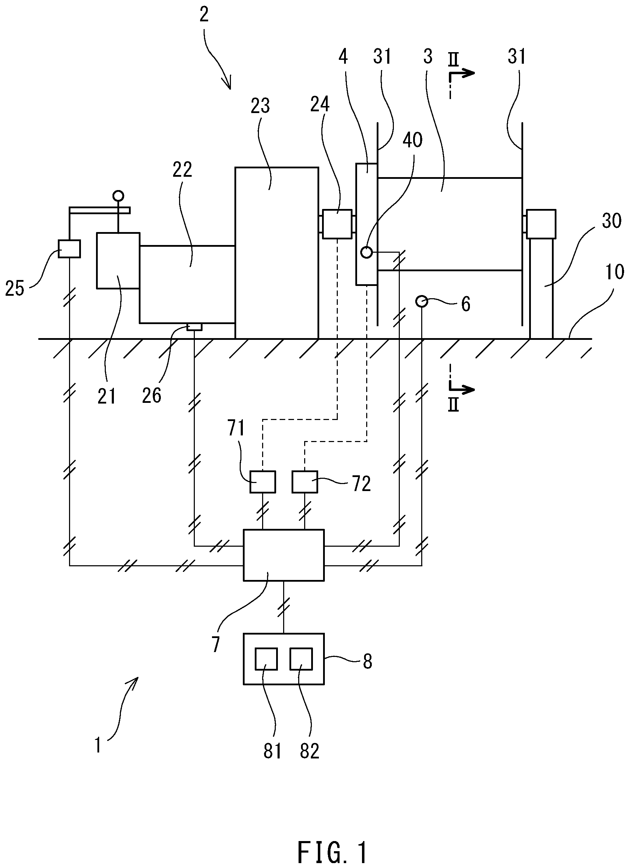

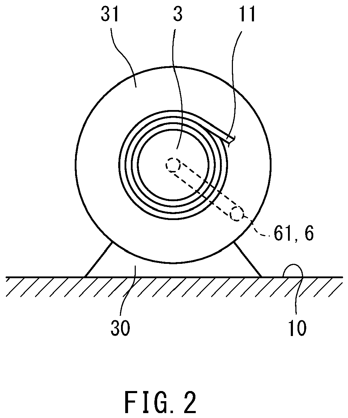

FIG. 1 and FIG. 2 show a mooring line tension control system 1 according to one embodiment of the present disclosure. The system 1 includes: a winch 2 located on a deck 10 of a ship; control circuitry 7, which controls component machineries (a motor 22, a band brake 4, and a clutch 24, which will be described below) of the winch 2; and an operator 8 electrically connected to the control circuitry 7.

The winch 2 includes a drum 3 and the aforementioned motor 22. The drum 3 is rotatably supported by a support base 30. The motor 22 rotates the drum 3. In the present embodiment, a reduction gear 23 is located between the motor 22 and the drum 3. The winch 2 further includes the aforementioned band brake 4 and clutch 24. The band brake 4 prevents the drum 3 from rotating (i.e., brakes the drum 3) or allows the drum 3 to rotate. The clutch 24 is located between the drum 3 and the motor 22 (in the present embodiment, between the drum 3 and the reduction gear 23).

A mooring line 11 (the illustration of which is omitted in FIG. 1 for the purpose of simplifying the drawing) is wound around the drum 3. Flanges 31 protrude radially outward from both ends of the drum 3.

The band brake 4 is located along the flange 31 on the reduction gear 23 side. The band brake 4 is switched between a restraining state in which the band brake 4 prevents the drum 3 from rotating and a released state in which the band brake 4 allows the drum 3 to rotate.

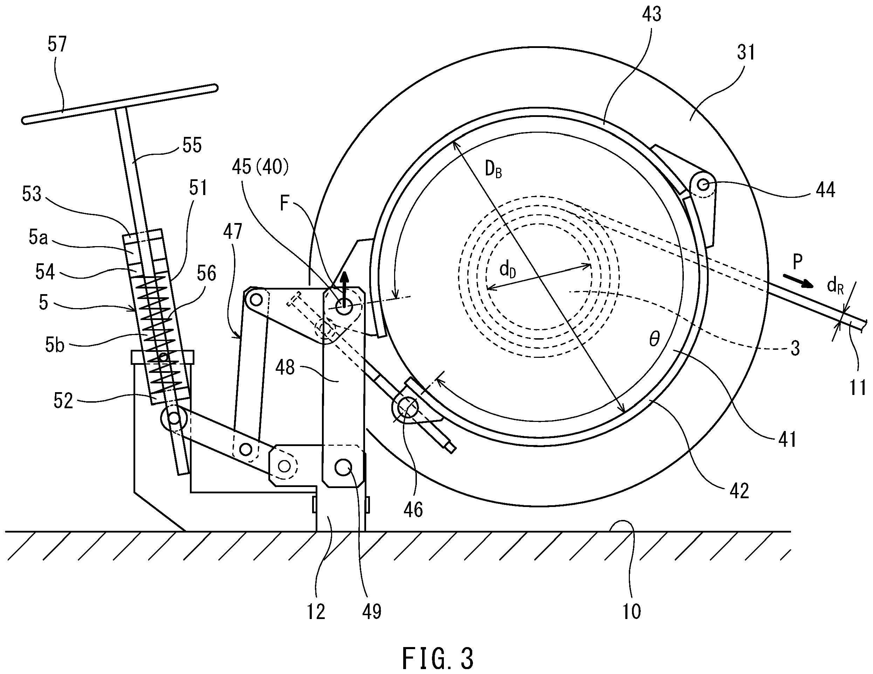

As shown in FIG. 3, the band brake 4 includes a brake drum 41 fixed to the flange 31. Specifically, the brake drum 41 rotates together with the drum 3. The band brake 4 further includes a pair of bands 42 and 43 and a hydraulic cylinder 5. Each of the bands 42 and 43 is arc-shaped, and extends along the brake drum 41. The hydraulic cylinder 5 operates the bands 42 and 43.

One ends of the bands 42 and 43 are coupled to each other via a pin 44. Pins 45 and 46 are located at the other ends of the bands 43 and 42, respectively. The pins 45 and 46 are connected to the hydraulic cylinder 5 by a mechanical linkage 47.

The hydraulic cylinder 5 includes therein a spring 56, which regulates the braking force of the band brake 4 in the restraining state. To be more specific, the hydraulic cylinder 5 includes: a cylindrical tube 51; a first end plate 52 and a second end plate 53, which seal both ends of the tube 51, respectively; and a piston 54 located in the tube 51.

The hydraulic cylinder 5 further includes a rod 55, which penetrates the first end plate 52, the piston 54, and the second end plate 53. The rod 55 shifts together with the piston 54 while sliding on the first end plate 52 and the second end plate 53. The mechanical linkage 47 is connected to a portion of the rod 55, the portion protruding beyond the first end plate 52.

There is an actuating chamber 5a between the piston 54 and the second end plate 53, and there is a spring chamber 5b between the piston 54 and the first end plate 52. The actuating chamber 5a is filled with hydraulic oil, and the spring 56 is located in the spring chamber 5b. The spring 56 urges the piston 54 toward the second end plate 53.

As shown in FIG. 1, the actuating chamber 5a is connected to a solenoid valve 72. The solenoid valve 72 switches whether to supply the hydraulic oil to the actuating chamber 5a or to discharge the hydraulic oil from the actuating chamber 5a. The hydraulic cylinder 5 is controlled by the control circuitry 7 via the solenoid valve 72. Alternatively, the band brake 4 may include an electric cylinder instead of the hydraulic cylinder 5, and the electric cylinder may be directly controlled by the control circuitry 7.

When the hydraulic oil is supplied to the actuating chamber 5a, the rod 55 shifts in a first direction (a direction from the second end plate 53 toward the first end plate 52) against the urging force of the spring 56, such that the mechanical linkage 47 moves the pins 45 and 46 away from each other. Consequently, a slight gap is formed between the brake drum 41 and the bands 42 and 43, such that the band brake 4 is brought into the released state.

On the other hand, when the hydraulic oil is discharged from the actuating chamber 5a, the rod 55 shifts in a second direction (a direction from the first end plate 52 toward the second end plate 53) due to the urging force of the spring 56, such that the mechanical linkage 47 moves the pins 45 and 46 toward each other. Consequently, the bands 42 and 43 tighten the brake drum 41, such that the band brake 4 is brought into the restraining state.

The mechanical linkage 47 includes a tension bar 48, which is swingable about the pin 45, and the tension bar 48 is coupled, via a pin 49, to a bracket 12 located on the deck 10. In the present embodiment, the pin 45 between the tension bar 48 and the band 43 is a pin-type load cell 40. In other words, the load cell 40 is incorporated in the band brake 4.

When the band brake 4 is brought into the restraining state, band tension F is applied upward to the load cell 40. That is, the load cell 40 measures the band tension F. Incidentally, when tension P is applied to the mooring line 11, the tension P causes rotational force to be applied to the drum 3, and upward force is applied to the load cell 40. Accordingly, the band tension F measured by the load cell 40 significantly depends on the tension P of the mooring line 11.

The direction in which the mooring line 11 is wound around the drum 3 may be opposite to the winding direction shown in FIG. 3. In this case, the configuration of the mechanical linkage 47 may be changed such that downward force is applied to the load cell 40.

Further, in the present embodiment, the hydraulic cylinder 5 is configured such that the amount of deflection of the spring 36 in the restraining state is adjustable. Accordingly, the braking force of the band brake 4 is changeable.

Specifically, the rod 55 is connected to the mechanical linkage 47 via a screw structure (not shown). A handle 57 to rotate the rod 55 is located on one end of the rod 55 in the second direction.

In a case where a distance from a connection point where the rod 55 and the mechanical linkage 47 are connected to each other to the piston 54 is shortened through an operation of the handle 57, the amount of deflection of the spring 36 in the restraining state increases, which causes an increase in the braking force. On the other hand, in a case where the distance from the connection point where the rod 55 and the mechanical linkage 47 are connected to each other to the piston 54 is lengthened through an operation of the handle 57, the amount of deflection of the spring 36 in the restraining state decreases, which causes a decrease in the braking force.

The clutch 24 is switched between an engaged state in which the clutch 24 couples the drum 3 to the motor 22 (in the present embodiment, to the reduction gear 23) and a disengaged state in which the clutch 24 separates the drum 3 from the motor 22 (in the present embodiment, from the reduction gear 23). Although not illustrated, the clutch 24 includes a hydraulic cylinder. The hydraulic cylinder is connected to a solenoid valve 71 (see FIG. 1), and is controlled by the control circuitry 7 via the solenoid valve 71. Alternatively, the clutch 24 may include an electric cylinder instead of the hydraulic cylinder, and the electric cylinder may be directly controlled by the control circuitry 7.

The motor 22 rotates the drum 3 in an unwinding direction and a winding direction. In the present embodiment, a near-machinery operator 21 including an operating lever is located on the motor 22. The operating lever of the near-machinery operator 21 is operated by an automatic operator 25. The motor 22 is controlled by the control circuitry 7 via the near-machinery operator 21 and the automatic operator 25.

In the present embodiment, the motor 22 is a hydraulic motor including a first port and a second port. Specifically, when the operating lever of the near-machinery operator 21 is inclined in one direction, the hydraulic oil is supplied to the first port of the hydraulic motor, and also, the hydraulic oil flows out of the second port, whereas when the operating lever of the near-machinery operator 21 is inclined in the other direction, the hydraulic oil is supplied to the second port of the hydraulic motor, and also, the hydraulic oil flows out of the first port. Alternatively, the motor 22 may be an electric motor.

For example, the control circuitry 7 is a computer including memories such as a ROM and RAM, a storage such as a HDD or SSD, and a CPU. The CPU executes a program stored in the ROM or the storage.

The operator 8, which is electrically connected to the control circuitry 7, is located, for example, near the winch 2, or in the bridge or cargo control room of the ship. The operator 8 includes: a display 81, which displays various information for a ship crew; and an inputter 83, which receives an input from the ship crew. The operator 8 is, for example, a touch panel.

In the present embodiment, a pressure sensor 26, which measures the supply pressure of the hydraulic oil, is located on the motor 22, which is a hydraulic motor. The control circuitry 7 is electrically connected also to the pressure sensor 26. Instead of the pressure sensor 26, a torque sensor that measures the output torque of the motor 22 may be adopted.

The control circuitry 7 is electrically connected also to the aforementioned load cell 40 and a winding layer number detector 6. The winding layer number detector 6 detects a winding layer number N (the number of winding layers) of the mooring line 11 on the drum 3.

The winding layer number detector 6 includes: a sensor that measures a numerical value relating to the number of winding layers of the mooring line 11; and an operational processor that converts the numerical value measured by the sensor into the winding layer number N of the mooring line 11. The operational processor may be incorporated into the control circuitry 7. In the present embodiment, the sensor that measures the numerical value relating to the number of winding layers of the mooring line 11 is an encoder 61, which measures the rotational angle of the drum 3.

To be more specific, the encoder 61 is located on a sprocket that is positioned away from the drum 3. A chain is wound around the sprocket and another sprocket mounted to the drum 3.

At the time of mooring the ship to, for example, a quay wall, after the end of the mooring line 11 is secured to a bitt or the like on the quay wall, the drum 3 is rotated by the motor 22 in the winding direction to stretch the mooring line 11. Then, the band brake 4 is switched to the restraining state, and the clutch 24 is switched to the disengaged state. Thereafter, control in a ship mooring mode is performed by the control circuitry 7.

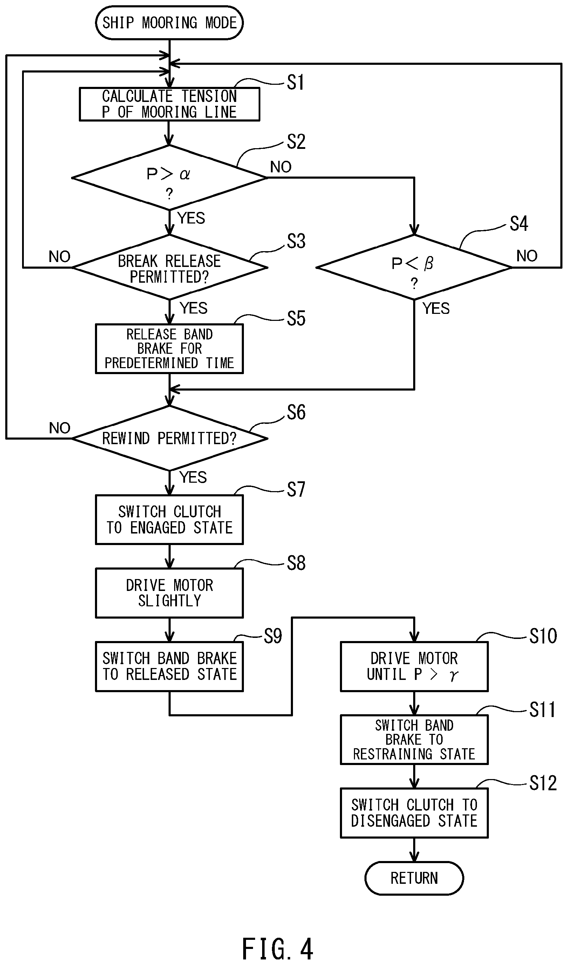

FIG. 4 shows a flowchart of the control in the ship mooring mode performed by the control circuitry 7. First, the control circuitry 7 calculates the tension P [kN] of the mooring line 11 based on the band tension F [kN] measured by the load cell 40 and the winding layer number N of the mooring line 11 detected by the winding layer number detector 6 (step S1). The control circuitry 7 displays the calculated tension P on the display 81.

Specifically, the control circuitry 7 calculates the tension P of the mooring line 11 by using the following tension calculation formula (1), which includes a tension coefficient K.

[Math. 1]

$$P = F \times \frac{D_B}{d_D + (2 \times N - 1) \times d_R} \times K \quad \cdots (1)$$

$D_B$: brake drum diameter [mm]
$d_R$: mooring line diameter [mm]
$d_D$: winch drum diameter (the diameter of the drum 3) [mm]

The tension coefficient K in the tension calculation formula (1) is calculated by using a formula (2) shown below.
[Math. 2]

$$K = 1 - \frac{1}{e^{(\mu \times \theta)}} \quad \cdots (2)$$

$\mu$: frictional coefficient between the bands and the brake drum
$\theta$: contact angle between the bands and the brake drum

As shown in FIG. 3, the contact angle $\theta$ between the bands and the brake drum is an angle between the center of the pin 45 and the center of the pin 46.

Thereafter, the control circuitry 7 determines whether or not the calculated tension P of the mooring line 11 is greater than a first setting value $\alpha$ (step S2). In a case where the tension P of the mooring line 11 is greater than the first setting value $\alpha$ (YES in step S2), the control circuitry 7 displays, on the display 81, the tension P being greater than the first setting value $\alpha$, and waits for an input of a brake release permission by a ship crew with use of the inputter 82 (step S3).

If the brake release permission is not inputted with the inputter 83, the flow returns to step S1, whereas if the brake release permission is inputted with the inputter 82, the flow proceeds to step S5.

In step S5, the control circuitry 7 switches the band brake 4 to the released state for a predetermined time. Specifically, the control circuitry 7 switches the band brake 4 to the released state, and then after the predetermined time has elapsed, switches the band brake 4 to the restraining state. After the band brake 4 has been switched to the released state, while the band brake 4 is in the released state, the mooring line 11 is unwound from the drum 3. Thereafter, the control circuitry 7 waits for an input of a rewind permission for the mooring line 11 by the ship crew with use of the inputter 82 (step S6).

On the other hand, in a case where the tension P of the mooring line 11 is not greater than the first setting

value $\alpha$ (NO in step S2), the control circuitry 7 determines whether or not the tension P of the mooring line 11 is less than a second setting value $\beta$, which is less than the first setting value $\alpha$ (step S4). In a case where the tension P of the mooring line 11 is not less than the second setting value $\beta$ (NO in step S4), i.e., in the case of $\beta \leq P \leq \alpha$, the flow returns to step S1. On the other hand, in a case where the tension P of the mooring line 11 is less than the second setting value $\beta$ (YES in step S4), the flow proceeds to step S6.

In step S6, if the rewind permission is not inputted with the inputter 82, the flow returns to step S1, whereas if the rewind permission is inputted with the inputter 82, the flow proceeds to step S7.

In step S7, the control circuitry 7 switches the clutch 24 to the engaged state. Although not illustrated, the clutch 24 is brought into the engaged state as a result of drum-side claws and motor-side claws meshing with each other. In the disengaged state, the drum-side claws and the motor-side claws are separated from each other. Given the possibility that the meshing of the claws with each other in the clutch 24 is insufficient, the control circuitry 7 drives the motor 22 slightly (step S8). Consequently, the drum-side claws and the motor-side claws of the clutch 24 fully mesh with each other.

Next, the control circuitry 7 switches the band brake 4 to the released state (step S9), and thereafter, drives the motor 22 to wind the mooring line 11 around the drum 3 until the tension P of the mooring line 11 becomes greater than a third setting value $\gamma$ (step S10).

The calculation of the tension P based on the measurement value of the load cell 40 cannot be performed unless the band brake 4 is in the restraining state. Therefore, in the present embodiment, the control circuitry 7 determines that the tension P of the mooring line 11 has become greater than the third setting value $\gamma$ when the supply pressure of the hydraulic oil measured by the pressure sensor 26 has exceeded a threshold value.

After the winding of the mooring line 11 is completed, the control circuitry 7 switches the band brake 4 to the restraining state (step S11), and then switches the clutch 24 to the disengaged state (step S12). Thereafter, the flow returns to step S1.

In step S12, there is a case where even when the hydraulic cylinder of the clutch 24 is moved, the clutch 24 is not switched to the disengaged state due to friction between the claws. In this case, the motor 22 may be driven slightly.

As described above, in the mooring line tension control system 1 of the present embodiment, in a ship mooring state, in a case where the tension P of the mooring line 11 becomes greater than the first setting value $\alpha$, the control circuitry 7 operates the band brake 4, the clutch 24, and the motor 22 to loosen the mooring line 11 and then rewind the mooring line 11. Thus, when the tension P of the mooring line 11 becomes excessively great, loosening and rewinding of the mooring line 11 can be performed without directly operating the winch 2.

Further, in the present embodiment, also in a case where the tension P of the mooring line 11 becomes less than the second setting value $\beta$, the control circuitry 7 operates the band brake 4, the clutch 24, and the motor 22. Thus, in the ship mooring state, also when the tension P of the mooring line 11 becomes excessively small, rewinding of the mooring line 11 can be performed without directly operating the winch 2.

(Variations)

The present disclosure is not limited to the above-described embodiment. Various modifications can be made without departing from the scope of the present disclosure.

For example, steps S3 and S6 may be eliminated, and thereby the determinations by the ship crew may be made unnecessary. However, the presence of step S3 allows the ship crew to decide the timing of loosening the mooring line 11, and the presence of step S5 allows the ship crew to decide the timing of rewinding the mooring line 11. The determinations in steps S3 and S5 need not be performed by the ship crew, but may be performed by artificial intelligence (AI).

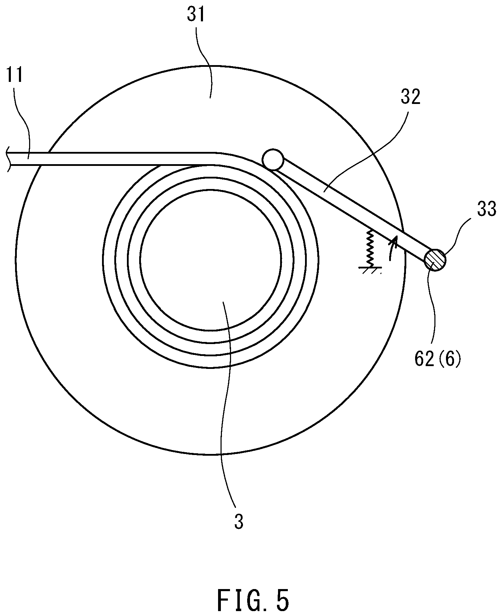

The sensor included in the winding layer number detector 6, the sensor measuring the numerical value relating to the number of winding layers of the mooring line 11, is not limited to the encoder 61, which measures the rotational angle of the drum 3. For example, as shown in FIG. 5, in a case where a holder 32, which holds down the mooring line 11 against the drum 3, is swingable about a supporting point 33, the sensor included in the winding layer number detector 6, the sensor measuring the numerical value relating to the number of winding layers of the mooring line 11, may be an encoder (or an inclination sensor) 62, which measures the angle of the holder 32.

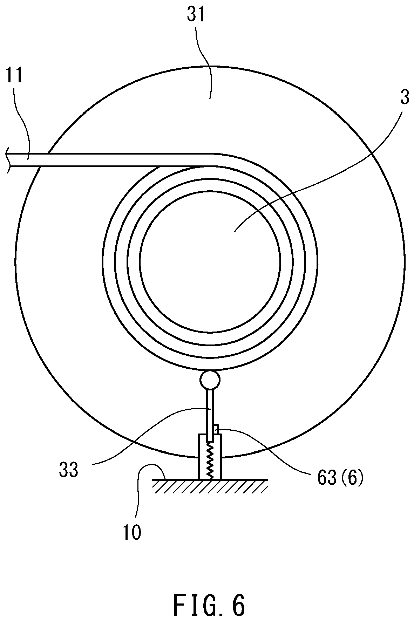

As another example, as shown in FIG. 6, in a case where a holder 33, which holds down the mooring line 11 against the drum 3, is reciprocable, the sensor included in the winding layer number detector 6, the sensor measuring the numerical value relating to the number of winding layers of the mooring line 11, may be a stroke sensor 63, which measures the position of the holder 33.

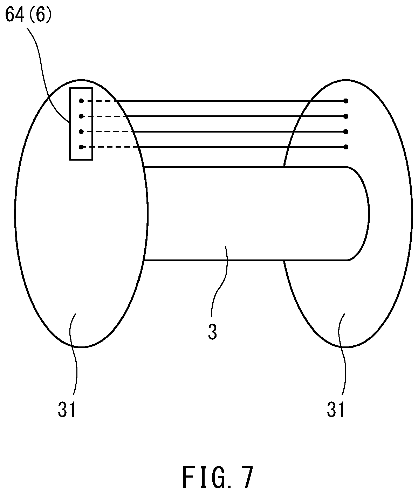

The winding layer number detector 6 may directly detect the number of winding layers of the mooring line 11 on the drum 3 by using a camera. Alternatively, as shown in FIG. 7, the winding layer number detector 6 may directly detect the winding layer number N of the mooring line 11 on the drum 3 by using an infrared unit 64 located on the flange 31. In the case of using the infrared unit 64, at a predetermined position between mooring hardware (e.g., a guide roller for the mooring line 11) located on the deck 10 and the drum 3, the height of the mooring line 11 from the deck 10 may be measured by using the infrared unit 64, and the height may be converted into the winding layer number N.

Instead of using the winding layer number detector 6, a split drum including a storage drum and a tension drum may be used as the drum 3, and in the ship mooring state, the mooring line 11 may be wound around the tension drum and the radius from the center of the drum 3 to the line of action of the tension P may be made constant. In this case, however, at the time of mooring, it is necessary to perform additional work of winding the mooring line 11 around the tension drum. On the other hand, in a case where the winding layer number N of the mooring line 11 on the drum 3 is detected by the winding layer number detector 6, the aforementioned additional work, which is performed at the time of mooring in the case of using a split drum, need not be performed.

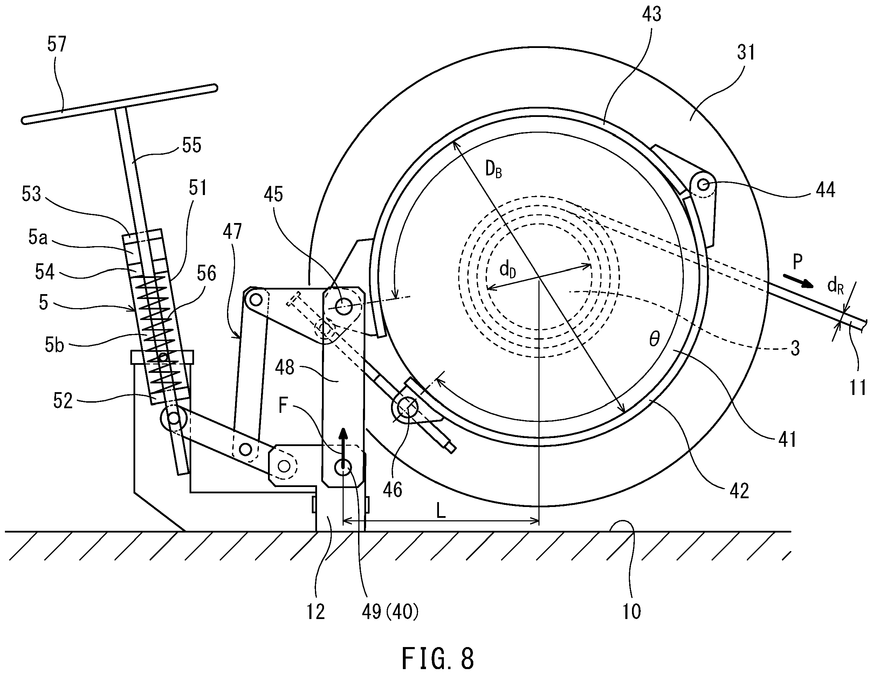

Further, as shown in FIG. 8, the pin-type load cell 40, which is incorporated in the band brake 4, may be the pin 49 between the bracket 12 located on the deck 10 and the tension bar 48. In this case, the control circuitry 7 calculates the tension P applied to the mooring line 11 by using the following tension calculation formula (3).

[Math. 3]

$$P = F \times \frac{L}{d_D + (2 \times N - 1) \times d_R} \quad \cdots (3)$$

L: horizontal distance [mm] from the center of the drum 3 to the center of the pin 49.

(Summary)

A mooring line tension control system according to the present disclosure includes: a drum around which a mooring line is wound; a motor that rotates the drum in an unwinding direction and a winding direction; a band brake that is switched between a restraining state in which the band brake prevents the drum from rotating and a released state in which the band brake allows the drum to rotate, the band brake including a brake drum that rotates together with the drum; a clutch that is switched between an engaged state in which the clutch couples the drum to the motor and a disengaged state in which the clutch separates the drum from the motor; control circuitry that controls the motor, the band brake, and the clutch; and a load cell that measures band tension, the load cell being incorporated in the band brake. In a ship mooring state in which the clutch is in the disengaged state and the band brake is in the restraining state, the control circuitry calculates tension of the mooring line based on the band tension measured by the load cell, and in a case where the calculated tension of the mooring line is greater than a setting value, the control circuitry switches the band brake to the released state to unwind the mooring line from the drum, and thereafter switches the clutch to the engaged state and drives the motor to wind the mooring line around the drum.

According to the above configuration, in a ship mooring state, in a case where the tension of the mooring line becomes greater than the setting value, the control circuitry operates the band brake, the clutch, and the motor to loosen the mooring line and then rewind the mooring line. Thus, when the tension of the mooring line becomes excessively great, loosening and rewinding of the mooring line can be performed without directly operating the winch.

The setting value may be a first setting value. In the ship mooring state, in a case where the calculated tension of the mooring line is less than a second setting value that is less than the first setting value, the control circuitry may switch the clutch to the engaged state, and drive the motor to wind the mooring line around the drum. According to this configuration, in the ship mooring state, also when the tension of the mooring line becomes excessively small, rewinding of the mooring line can be performed without directly operating the winch.

The above mooring line tension control system may further include a winding layer number detector that detects the number of winding layers of the mooring line on the drum. The control circuitry may calculate the tension of the mooring line based on the band tension measured by the load cell and the number of winding layers of the mooring line detected by the winding layer number detector. As the drum, a split drum including a storage drum and a tension drum may be used, and in the ship mooring state, the mooring line may be wound around the tension drum. In this case, however, at the time of mooring, it is necessary to perform additional work of winding the mooring line around the tension drum. On the other hand, in a case where the number of winding layers of the mooring line on the drum is detected by the winding layer number detector, the additional work, which is performed at the time of mooring in the case of using a split drum, need not be performed.

The above mooring line tension control system may further include an operator that includes a display and an inputter. The control circuitry may display the calculated tension of the mooring line on the display, and after a brake release permission has been inputted with the inputter, the control circuitry may switch the band brake to the released state. This configuration allows a ship crew to decide the timing of loosening the mooring line.

For example, the band brake may include: a pair of bands, each of which extends along the brake drum; and a hydraulic cylinder that operates the pair of bands. The control circuitry may control the hydraulic cylinder via a solenoid valve.

**Claims**

1. A mooring line tension control system comprising:

a drum around which a mooring line is wound;
a motor that rotates the drum in an unwinding direction and a winding direction;
a band brake that is switched between a restraining state in which the band brake prevents the drum from rotating and a released state in which the band brake allows the drum to rotate, the band brake including a brake drum that rotates together with the drum;
a clutch that is switched between an engaged state in which the clutch couples the drum to the motor and a disengaged state in which the clutch separates the drum from the motor;
control circuitry that controls the motor, the band brake, and the clutch; and
a load cell that measures band tension, the load cell being incorporated in the band brake, wherein
in a ship mooring state in which the clutch is in the disengaged state and the band brake is in the restraining state, the control circuitry calculates tension of the mooring line based on the band tension measured by the load cell, and in a case where the calculated tension of the mooring line is greater than a setting value, the control circuitry switches the band brake to the released state to unwind the mooring line from the drum, and thereafter switches the clutch to the engaged state and drives the motor to wind the mooring line around the drum.

2. The mooring line tension control system according to claim 1, wherein

the setting value is a first setting value, and
in the ship mooring state, in a case where the calculated tension of the mooring line is less than a second setting value that is less than the first setting value, the control circuitry switches the clutch to the engaged state, and drives the motor to wind the mooring line around the drum.

3. The mooring line tension control system according to claim 1 or 2, further comprising a winding layer number detector that detects the number of winding layers of the mooring line on the drum, wherein
the control circuitry calculates the tension of the mooring line based on the band tension measured by the load cell and the number of winding layers of the mooring line detected by the winding layer number detector.

4. The mooring line tension control system according to any one of claims 1 to 3, further comprising an operator that includes a display and an inputter, wherein
the control circuitry displays the calculated tension of the mooring line on the display, and after a brake release permission has been inputted with the inputter, the control circuitry switches the band brake to the released state.

5. The mooring line tension control system according to any one of claims 1 to 4, wherein

the band brake includes:

a pair of bands, each of which extends along the brake drum; and
a hydraulic cylinder that operates the pair of bands, and

the control circuitry controls the hydraulic cylinder via a solenoid valve.

FIG. 1

FIG. 2

FIG. 3

EP 4 257 838 A1

SHIP MOORING MODE

CALCULATE TENSION
P OF MOORING LINE — S1

$P > \alpha$ ? — S2

NO

YES

BREAK RELEASE
PERMITTED? — S3

NO

$P < \beta$ ? — S4

NO

YES

YES

RELEASE BAND
BRAKE FOR
PREDETERMINED TIME — S5

REWIND PERMITTED? — S6

NO

YES

SWITCH CLUTCH
TO ENGAGED STATE — S7

DRIVE MOTOR
SLIGHTLY — S8

SWITCH BAND BRAKE
TO RELEASED STATE — S9

DRIVE MOTOR
UNTIL $P > \gamma$ — S10

SWITCH BAND
BRAKE TO
RESTRAINING STATE — S11

SWITCH CLUTCH TO
DISENGAGED STATE — S12

RETURN

FIG. 4

31

11

32

33

62 (6)

3

FIG. 5

FIG. 6

64 (6)

3

31

31

# FIG. 7

FIG. 8

## INTERNATIONAL SEARCH REPORT

| International application No. |
| --- |
| **PCT/JP2021/037838** |

| A. | CLASSIFICATION OF SUBJECT MATTER |
| --- | --- |

*F16D 49/12*(2006.01)i; *F16D 66/00*(2006.01)i; *B66D 1/50*(2006.01)i; *B66D 1/72*(2006.01)i; *B63B 21/16*(2006.01)i; *B63B 21/20*(2006.01)i
FI: B63B21/16; B63B21/20 Z; B66D1/72 A; B66D1/50 B; B66D1/50 D; F16D49/12; F16D66/00 Z

According to International Patent Classification (IPC) or to both national classification and IPC

| B. | FIELDS SEARCHED |
| --- | --- |

Minimum documentation searched (classification system followed by classification symbols)

F16D49/12; F16D66/00; B66D1/50; B66D1/72; B63B21/16; B63B21/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2002-211478 A (MITSUBISHI HEAVY IND., LTD.) 31 July 2002 (2002-07-31) claim 1, paragraphs [0005]-[0025], fig. 1-8 | 1-5 |
| Y | 吉田肇. 甲板機械(1). 日本マリンエンジニアリング学会誌. 01 November 2008, vol. 43, no. 6, pp. 922-928, DOI: 10.5988/jime.43.6_922, ISSN: 1884-3778 (online), 1346-1427 (print), (YOSHIDA, Hajime. Marine Engineering: Journal of the Japan Institution of Marine Engineering), non-official translation (Deck Machinery (1).) pp. 924, 925 | 1-5 |
| Y | 重川亘,島田伸和. "8.4.2　自動係船機（Autotension mooring winch）". 新訂　舶用補機の基礎. Revised First Edition, Seizando-Shoten Publishing Co., Ltd., 18 June 1992, pp. 301-308, ISBN: 4-425-64013-6, non-official translation (SHIGEKAWA, Wataru, SHIMADA, Nobukazu. Fundamentals of Marine Auxiliary Machinery, New Revised Edition.) pp. 301, 302 | 1-5 |
| Y | JP 63-17796 A (ISHIKAWAJIMA-HARIMA HEAVY INDUSTRIES CO., LTD.) 25 January 1988 (1988-01-25) p. 2, lower left column, line 2 to p. 3, lower right column, line 6, fig. 1, 2, 4 | 3-5 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 December 2021** | **14 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

**INTERNATIONAL SEARCH REPORT**

| International application No. |
| --- |
| **PCT/JP2021/037838** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 62-255365 A (NIPPON KOKAN K.K.) 07 November 1987 (1987-11-07)<br>p. 2, lower right column, line 18 to p. 4, upper right column, line 3, fig. 1-5 | 3-5 |
| A | 中村昌彦,梶原宏之,原正一,眞鍋三雄,才木秀俊. ウィンチ制御による係船の自動化に関する研究 ―その3 試作された電動ウィンチの制御―. 日本船舶海洋工学会講演会論文集. 2017, no. 4, pp. 367-370, DOI: 10.14856/conf.4.0_367, ISSN: 2424-1628, (NAKAMURA, Masahiko, KAJIWARA, Hiroyuki, HARA, Shoichi, MANABE, Mitsuo, SAIKI, Hidetoshi. "Automatic Control of Winch for Mooring: Part 3, Control of Electric Winch". Journal of the Japan Society of Naval Architects and Ocean Engineers.)<br>entire text, all drawings, all tables | 1-5 |
| A | 川崎油圧甲板機械. 川崎重工業株式会社. February 2017, pp. 3-12, (Kawasaki Hydraulic Deck Machinery. Kawasaki Heavy Industries, Ltd.)<br>entire text, all drawings, all tables | 1-5 |

Form PCT/ISA/210 (second sheet) (January 2015)

## INTERNATIONAL SEARCH REPORT
**Information on patent family members**

International application No.

**PCT/JP2021/037838**

| Patent document cited in search report | | | Publication date (day/month/year) | Patent family member(s) | Publication date (day/month/year) |
|---|---|---|---|---|---|
| JP | 2002-211478 | A | 31 July 2002 | (Family: none) | |
| JP | 63-17796 | A | 25 January 1988 | (Family: none) | |
| JP | 62-255365 | A | 07 November 1987 | (Family: none) | |

Form PCT/ISA/210 (patent family annex) (January 2015)

**EP 4 257 838 A1**

REFERENCES CITED IN THE DESCRIPTION

**Patent documents cited in the description**

- JP 2002211478 A